# EUROPÄISCHE PATENTSCHRIFT

(11) **EP 0 672 230 B1**
(45) Veröffentlichungstag und Bekanntmachung des Hinweises auf die Patenterteilung: **16.04.1997**
(21) Anmeldenummer: 94902720.5
(22) Anmeldetag: 08.12.1993
(51) Int. Cl.: F24D 3/16, F16L 3/24

(54) **KÜHLDECKE**
COOLING CEILING
PLAFOND DE REFROIDISSEMENT

(30) Priorität: 10.12.1992 DE 9216792 U; 08.10.1993 DE 9315216 U
(43) Veröffentlichungstag der Anmeldung: 20.09.1995
(73) Patentinhaber: Hewing GmbH, D-48607 Ochtrup (DE)
(72) Erfinder: Homm, Karl, Georg, D-45768 Marl-Polsum (DE); Wittkämper, Michael, D-44867 Bochum (DE)
(74) Vertreter: Hilleringmann, Jochen, Dipl.-Ing.
(86) Internationale Anmeldenummer: EP9303457
(87) Internationale Veröffentlichungsnummer: WO9414010

(56) Entgegenhaltungen:
- BE-A- 890 513
- DE-A- 1 759 289
- DE-B- 1 112 153
- US-A- 3 043 567
- US-A- 4 624 088

## Beschreibung

Die Erfindung betrifft eine Kühldecke zur Raumluftklimatisierung mit einem von Kühlwasser durchströmten Rohrsystem nach dem Oberbegriff des Anspruchs 1.

Eine solche Kühldecke ist aus DE-A-39 21 719 bekannt. Bei dieser Kühldecke sind die das Wärmetauscherelement bildenden Rohre in eine Profilschiene eingelegt, die an ihrer zur Rohrdecke gerichteten Seite über eine Lagerschiene, einen Längsträger und eine Abhängestrebe von der Gebäude(Rohr-)decke abgehängt ist und an der Unterseite mit als Deckenverkleidungselement ausgebildeten Platten über Magnete verbunden ist. Diese Konstruktion baut aufwendig und ist unter beengten Platzverhältnissen wenig flexibel einsetzbar.

Der Erfindung liegt die Aufgabe zugrunde, eine Kühldecke für Raumluftklimatisierung der angegebenen Art zu schaffen, deren Kühlrohre spannungsfrei auf den Deckenelementen auflegbar sind und bei unterschiedlichen Deckenabständen mit geringem technischen Aufwand einen Toleranzausgleich ermöglichen.

Ausgehend von einer Kühldecke nach dem Oberbegriff des Anspruchs 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 28 verwiesen.

Mit der erfindungsgemäßen Ausgestaltung der Kühldecke mit dem Verbindungsglied ist in der Einbaulage eine spannungsfreie Auflage für die Kühlrohre erreicht und mit geringem Aufwand eine an unterschiedliche Einbaubedingungen anpaßbare Montage der Deckenelemente möglich, auf deren Innenseite jeweilige zur Rohdecke gerichtete Kühlwasserrohrbereiche für den Wärmeaustausch aufliegen. Dabei kann ein zwischen der Rohdecke und dem Deckenelement gebildeter Unterbau, z.B. das in der Einbaulage an einem Träger abgestützte Halteglied, als ein Standardträgerelement mit dem ein Standardpaneelteil bildenden Deckenelement so kombiniert werden, daß mit geringem Aufwand eine Anpassung auch an beengte Platzverhältnisse jeweils über das Verbindungsglied erfolgt, wobei das in der Einbaulage am Kühlrohr anliegende Deckenelement unter Ausnutzung eines vertikalen Bewegungsspiels in unterschiedlichen Einbauhöhen festlegbar ist.

Mit dem Verbindungsglied ist sowohl für eine Neuinstallation als auch Rekonstruktion von Kühldecken ein Bauteil geschaffen, das ohne zusätzliche Hilfsmittel mit geringem Aufwand montiert werden kann und eine einfache Demontage, z.B. bei Reparaturen, im Bereich der Kühldecke ermöglicht.

Die Ausgestaltung der Kühldecke mit einem Kunststoff-Formteil als Verbindungsglied, das vorzugsweise die Grundform eines Parallelepipeds aufweist, schafft eine leicht herstellbare, feste, schonende Verbindung der Kühlrohre bzw. -rohrbereiche mit den zugehörigen Haltegliedern. Die in flächigem Eingriff sowohl mit den Kühlrohren und den Haltegliedern stehenden Verbindungsglieder sind bei bevorzugter Ausbildung mit einwärts gerichteten Hakenteilen nur in einer gegenüber ihrer Einbaulage verschwenkten Stellung mit einem Halteglied verbind- und von diesem lösbar, so daß nach Herstellung der Verbindung mit einem Kühlrohr eine zwar höhenveränderliche, aber nicht ohne weiteres auflösbare Verbindung mit den Haltegliedern gewährleistet ist.

Weitere Einzelheiten und Vorteile der Erfindung ergeben sich aus der nachfolgenden Beschreibung und der Zeichnung, die mehrere Ausführungsbeispiele einer erfindungsgemäßen Kühldecke schematisch veranschaulicht. In der Zeichnung zeigen:
- Fig. 1: eine teilweise geschnittene Ausschnittsdarstellung einer Kühldecke nach der Erfindung mit einem Halteglied und einem Verbindungsglied in einer ersten Ausführungsform,
- Fig. 2: eine teilweise geschnittene Einzeldarstellung des Verbindungsglieds mit eingeclipsten Kühlrohr gemäß Fig. 1,
- Fig. 3: eine teilweise geschnittene Ausschnittsdarstellung der Kühldecke mit dem Verbindungsglied in einer zweiten Ausführungsform,
- Fig. 4: eine vergrößerte Einzeldarstellung des Verbindungsgliedes gemäß Fig. 3,
- Fig. 5: eine teilweise geschnittene Ausschnittsdarstellung einer Kühldecke nach der Erfindung mit einem Verbindungsglied in einer dritten Ausführungsform,
- Fig. 6 bis 9: Einzeldarstellungen des Verbindungsgliedes gemäß Fig. 5 in zweiteiliger Ausführungsform mit unterschiedlichen Steckverbindungsteilen,
- Fig. 10: eine teilweise geschnittene Ausschnittsdarstellung der Kühldecke ähnlich Fig. 5 zur Veranschaulichung eines Kühlrohres im Bereich eines Verlegebogens,
- Fig. 11: eine schematische Seitenansicht eines Kühlrohrabschnitts in Einbaulage mit zwei Verbindungsgliedern und mehreren zwischenliegenden Rohrführungssegmenten,
- Fig. 12: eine Einzeldarstellung zweiteiliger Verbindungsglieder mit Steckverbindern im Bereich des Rohrträgerteils zur gegenseitigen Verbindung in Richtung quer zur Rohrverlegerichtung,
- Fig. 13 bis 16: Einzeldarstellungen unterschiedlicher Rohrführungssegmente,
- Fig. 17: eine schematische Einzeldarstellung von an einem bandförmigen Verbindungselement aufgereihten Rohrträger- und Hängeteilen, und
- Fig. 18 und 19: Einzeldarstellungen von unterschiedlichen Hängeteilen zur Befestigung von Rohrträgerteilen unmittelbar an Decken- oder Wandflächen.

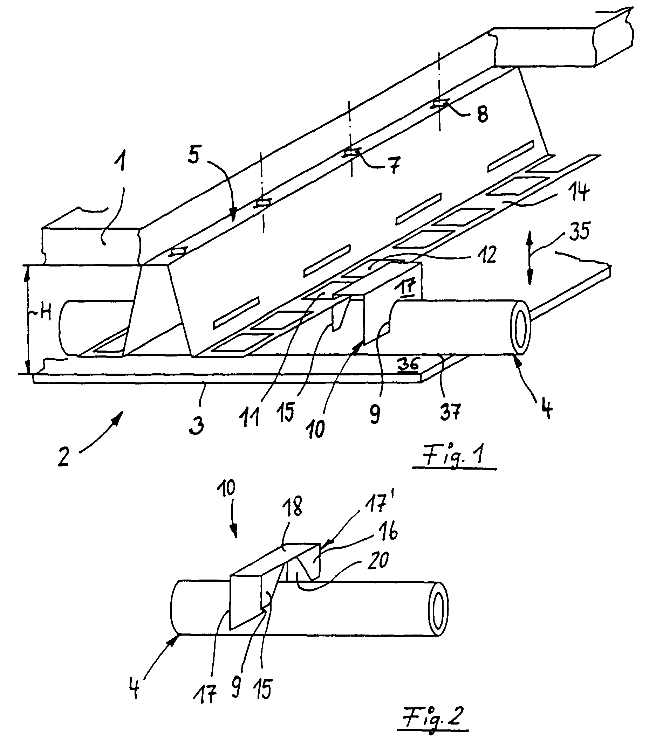

In Fig. 1 ist in einer perspektivischen Ansicht auf eine Rohdecke 1 eine von dieser abgehängte, insgesamt mit 2 bezeichnete Kühldecke dargestellt, deren Deckenelemente 3 von Paneelen gebildet sind, die das mit einem Kühlrohr 4 angedeutete Kühlrohrsystem optisch verdeckt. An der Rohdecke 1 sind das Deckenelement 3 und das Kühlrohr 4 über ein Halteglied 5 in der Einbaulage festgelegt, wobei dessen Befestigungsöffnungen 7,8 von Verbindungsmitteln (nicht dargestellt) durchgriffen sind und damit das Halteglied 5 an der Rohdecke 1 über eine lösbare Verbindung anliegen kann.

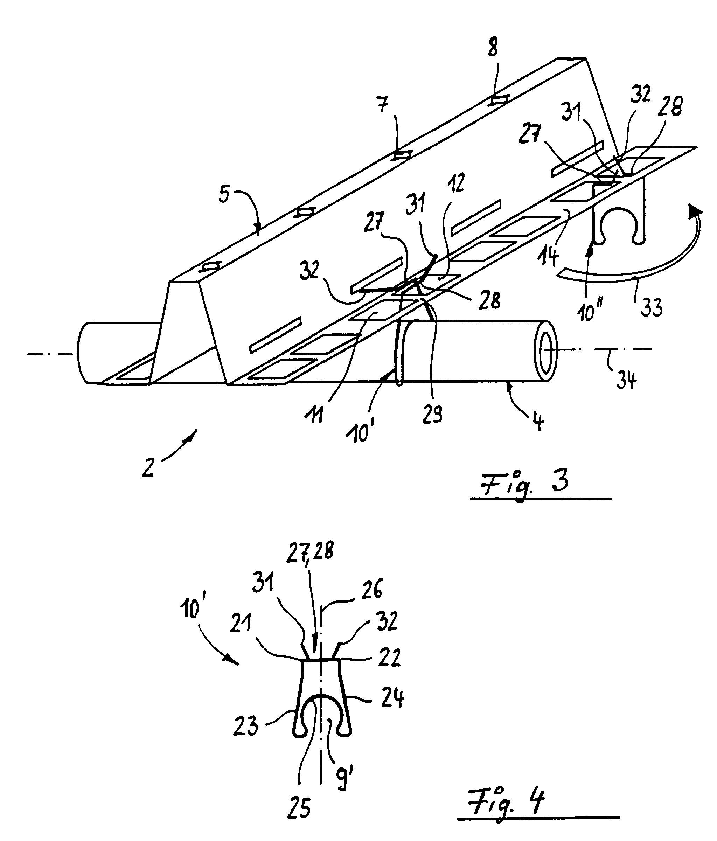

In beiden Ausführungsformen der Kühldecke 2 gemäß Fig. 1 und Fig. 3 ist zwischen dem Halteglied 5 und dem jeweiligen zugeordneten Bereich des Kühlrohres 4 ein dieses in einer jeweiligen Formausnehmung 9,9' aufnehmendes Verbindungsglied 10,10' angeordnet, wobei das Verbindungsglied 10 gemäß Fig. 1 zwei paarweise angeordnete Aufnahmeöffnungen 11,12 eines Halteschenkels 14 des Haltegliedes 5 durchgreift.

Das Verbindungsglied 10 ist dabei auf der zur Formausnehmung 9 abgewandten Seite mit zwei in der Einbaulage die Aufnahmeöffnungen 11,12 am Halteglied 5 durchgreifenden Traghaken 15,16 (Fig. 2) versehen.

Die Einzeldarstellung gemäß Fig. 2 verdeutlicht die Ausbildung des Verbindungsgliedes 10 als ein einstückiges, im Querschnitt ein U-Profil aufweisendes und aus Blech, Kunststoff oder dgl. bestehendes Formteil, dessen einer Profilschenkel 17 die Formausnehmung 9 für das Kühlrohr 4 aufweist und dessen anderen Profilschenkel 17' mit den Traghaken 15,16 versehen ist. Der Basisschenkel 18 bildet dabei einen auf den Halteschenkel 14 des Haltegliedes 5 auflegbaren Flachteil des Verbindungsglieds 10. In zweckmäßiger Ausführung sind die im Profilschenkel 17' vorgesehenen Traghaken 15,16 dadurch gebildet, daß der Profilschenkel 17' eine mittlere Formaussparung 20 aufweist.

In Fig. 3 und Fig. 4 ist eine zweite Ausführungsform des erfindungsgemäßen Verbindungsgliedes 10',10'' dargestellt, das von einem einstückig in eine entsprechende Form gebogenen Drahtteil gebildet ist. Dieses weist zwei, mit dem in die Aufnahmeöffnungen 11,12 des Haltegliedes 5 einführbaren Traghaken 21,22 versehene Halteschenkel 23,24 auf, die einstückig über einen die Formausnehmung 9' für das Kühlrohr 4 bildenden Drahtbogen 25 miteinander verbunden sind.

Die beiden vom Drahtbogen 25 ausgehenden Halteschenkel 23,24 verlaufen symmetrisch zu einer Mittelebene 26, wobei sich die endseitigen Traghaken 21,22 zangenartig miteinander kreuzen und dabei jeweilige Auflageschenkelbereiche 27,28 bilden, die auf einem zwischen den zwei Aufnahmeöffnungen 11,12 befindlichen Steg 29 abstützbar sind (Fig. 3). Die beiden Auflageschenkelbereiche 27,28 verlaufen dabei in gleicher Höhe oberhalb der Formausnehmung 9' und weisen eine auf den abstützenden Steg 29 des Halteteils 5 abgestimmte Länge auf.

Die beiden Traghaken 21,22 des Verbindungsgliedes 10' sind in vorteilhafter Ausbildung im jeweiligen Auflageschenkelbereich 27,28 einstückig mit einem sich aufwärts erstreckenden Führungsteil 31,32 verlängert, die gemeinsam eine Montagehilfe bilden.

In Fig. 3 verdeutlicht eine mit einem Pfeil 33 angedeutete Schwenkbewegung die einfache Montage- bzw. Demontagemöglichkeit des Verbindungsgliedes 10' bzw. 10". Die beiden Halteschenkel 23,24 sind in der Einbaulage (Verbindungsglied 10') in einer zur Rohrverlegeachse 34 senkrechten Halteebene (die der Mittelebene 26 entspricht) ausgerichtet, aus der sie beispielsweise bei einer Demontage federelastisch ausschwenkbar sind und in einer Schwenkphase entsprechend dem Verbindungsglied 10" in Fig. 3 vom Halteglied 5 getrennt werden können. Mit einem umgekehrten Bewegungsablauf können die Verbindungsglieder 10' bzw. 10" bei der Montage der Kühldecke 1 ohne zusätzliche Hilfsmittel am jeweiligen Halteglied 5 eingerastet und unverlierbar in der Einbaulage höhenbeweglich so festgelegt werden, daß mit geringem Aufwand und ohne Beschädigungen die vorbeschriebene Demontage möglich ist.

In der Ausführungsform des Verbindungsgliedes 10 gemäß Fig. 1 und 2 wird dieses Blechformteil ebenfalls unverlierbar mit dem Halteglied 5 verbunden, wobei diese Verbindung durch das in die Formausnehmung 9 eingreifende Kühlrohr 4 erreicht ist, das dabei gleichzeitig höhenbeweglich in seiner Einbaulage gehalten ist.

In Fig. 1 ist mit einem Pfeil 35 die Montagerichtung des Deckenelementes 3 angedeutet, das dabei mit seiner Oberseite 36 an der unteren Mantelfläche 37 des Kühlrohres 4 zur Anlage gelangt. Mit den Verbindungsgliedern 10,10',10'' ist dabei vorteilhaft erreicht, daß das in der Einbaulage am Kühlrohr 4 anliegende Deckenelement 3 unter Ausnutzung eines vertikalen Bewegungsspiels (Pfeilrichtung 35) in unterschiedlichen Einbauhöhen festlegbar ist, die über eine entsprechende Länge der Verbindungsglieder 10,10' bzw. der die Einbaulage des Kühlrohres 4 bestimmenden Profilschenkel 17 (Fig. 1) und Halteschenkel 23,24 (Fig. 3) so gewählt werden kann, daß bei vorteilhafter Anwendung eines Standard-Haltegliedes 5 unterschiedliche Abhängungen H der Kühldecke 2 gebildet sind.

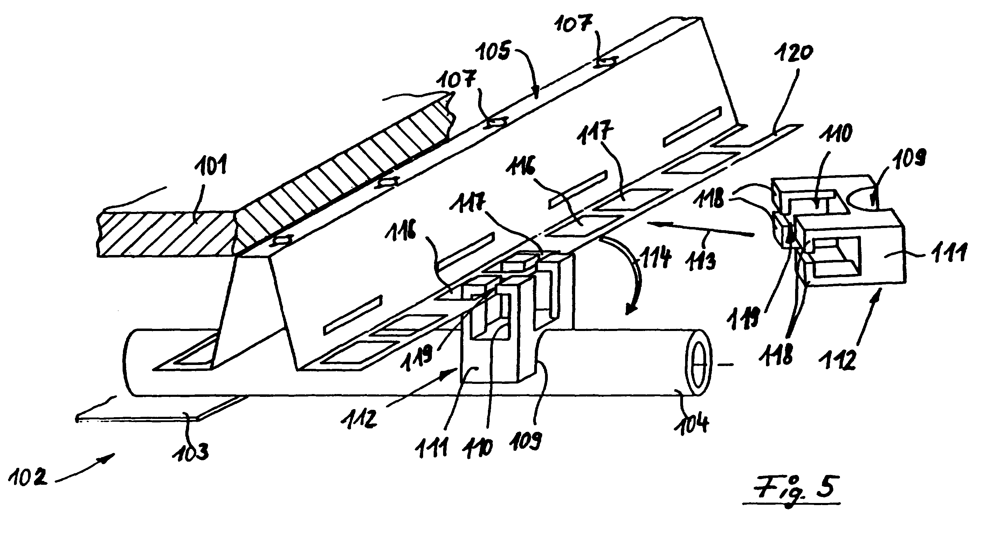

In Fig. 5 ist in einer perspektivischen Ansicht auf eine Rohdecke 101 eine von dieser abgehängte, insgesamt mit 102 bezeichnete Kühldecke dargestellt, deren Deckenelemente 103 von Paneelen gebildet sind, die das mit einem Kühlrohr 104 angedeutete Kühlrohrsystem optisch verdeckt. An der Rohdecke 101 sind das Deckenelement 103 und das Kühlrohr 104 über ein Halteglied 105 in der Einbaulage festgelegt, wobei dessen Befestigungsöffnungen 107 von Verbindungsmitteln (nicht dargestellt) durchgriffen sind und damit das Halteglied 105 an der Rohdecke 101 über eine lösbare Verbindung anliegen kann.

Die Darstellung gemäß Fig. 5 verdeutlicht eine dritte Ausführungsform des Haltesystems, wobei zwischen dem Halteglied 105 und dem jeweiligen zugeordneten Bereich des Kühlrohres 104 ein einerseits in einer ersten Formausnehmung 109 das Kühlrohr aufnehmendes, andererseits am Halteglied 105 mit einer zweiten Formausnehmung 110 gehaltenes und als quaderförmiger Verbindungsblock 111 ausgebildetes Verbindungsglied 112 vorgesehen ist.

Die unterschiedlichen Montagephasen des Verbindungsblocks 111 (angedeutet mit Richtungspfeilen 113,114) verdeutlichen dabei in Fig. 5, daß der Verbindungsblock 111 im Bereich der zweiten Formausnehmung 110 mit in der Montagestellung in jeweiligen Aufnahmeöffnungen 116,117 des Haltegliedes 105 eingreifenden Auflagehaken 118 versehen ist, zwischen denen sich ein Montageschlitz 119 erstreckt. Die Breite dieses Montageschlitzes 119 ist dabei so bemessen, daß der Verbindungsblock 111 in der Montagestellung unverlierbar und höhenbeweglich auf einem Randsteg 120 des Haltegliedes 105 auflegbar ist.

In Fig. 5 bis Fig. 9 verdeutlichen jeweilige Einzeldarstellungen einer zweiten Ausführungsform des Verbindungsblocks 111' dessen Ausbildung als zweiteiliges Bauteil, das einen die erste Formausnehmung 109 aufweisenden Rohrträgerteil 121 und einen die zweite Formausnehmung 110 aufweisenden Hängeteil 122 aufweist. In zweckmäßiger Ausführungsform sind dabei der Rohrträgerteil 121 und der Hängeteil 122 jeweils mit über eine leicht montierbare Steckverbindung verbindbaren Paarungsteilen 123,124 versehen.

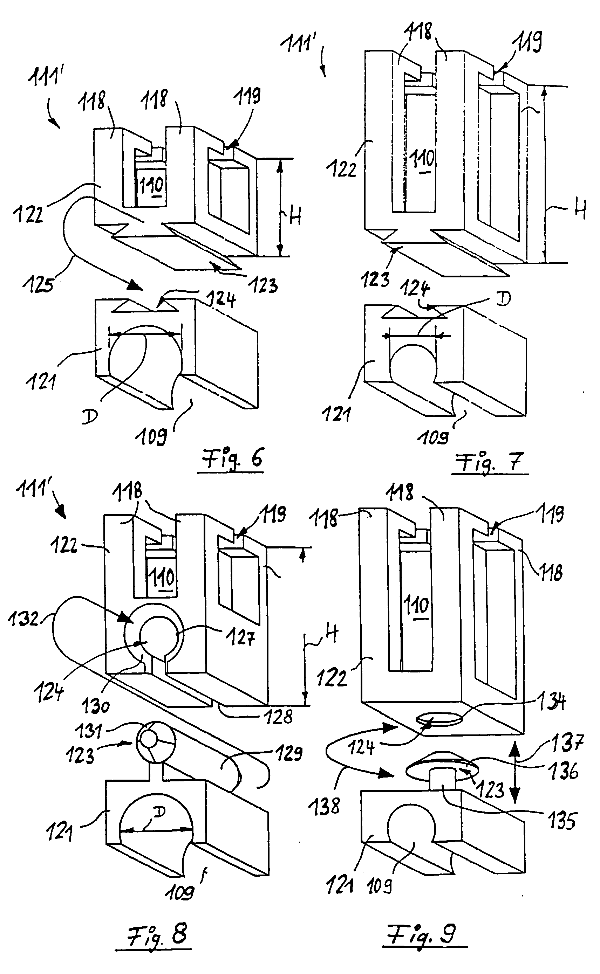

In Fig. 6 und Fig. 7 sind die Paarungsteile 123,124 zwischen Hängeteil 122 und Rohrträgerteil 121 jeweils als schwalbenschwanzförmig ineinander schiebbare Profilformen ausgebildet, so daß die beiden Bauteile beispielsweise nach einer Positionierung des Hängeteils 122 in der Montagestellung (ähnlich Fig. 5) mit geringem Aufwand über eine Steckbewegung (Pfeil 125 in Fig. 6) verbunden werden können.

In der Ausführungsform gemäß Fig. 8 sind die Paarungsteile 123,124 einerseits als eine in der Verbindungsstellung horizontale Bohrung 127 mit einem Führungsschlitz 128 und andererseits als ein Zylinderansatz 129 ausgebildet. Über entsprechende Fasen 130,131 im Bereich beider Paarungsteile 123,124 kann die Montagebewegung entsprechend der Pfeilrichtung 132 erleichtert werden.

In der Ausführungsform gemäß Fig. 9 sind als Paarungsteile 123,124 einerseits eine in der Verbindungsstellung vertikale Bohrung 134 und andererseits ein Rastansatz 135 mit einer Hinterschneidung 136 vorgesehen, so daß das Rohrträgerteil 121 und der Hängeteil 122 nach Art einer Clips-Verbindung montiert (Pfeil 137) und danach der Rohrträgerteil 121 in unterschiedliche Haltepositionen schwenkbar ist (Pfeil 138).

In den Ausführungsformen gemäß Fig. 6 bis 9 verdeutlichen unterschiedliche Größenabmessungen H der Hängeteile 122 und die Ausbildung der Rohrträgerteile 121 mit unterschiedlichen Durchmessern D im Bereich der ersten Formausnehmung 109 eine variable Gestaltung der Verbindungsblöcke 111,111', die mit geringem Aufwand an die jeweiligen Einbaubedingungen der Kühldecke 102 so anpaßbar sind, daß auf unterschiedlichste kundenspezifische Anforderungen reagiert werden kann. Dabei sind die quaderförmigen Verbindungsblöcke 111,111' in raumsparender Stapelstellung an den jeweilgen Montageort transportierbar und über die vorbeschriebenen Paarungsteile 123,124 mit geringem Aufwand und ohne zusätzliche Hilfsmittel montierbar.

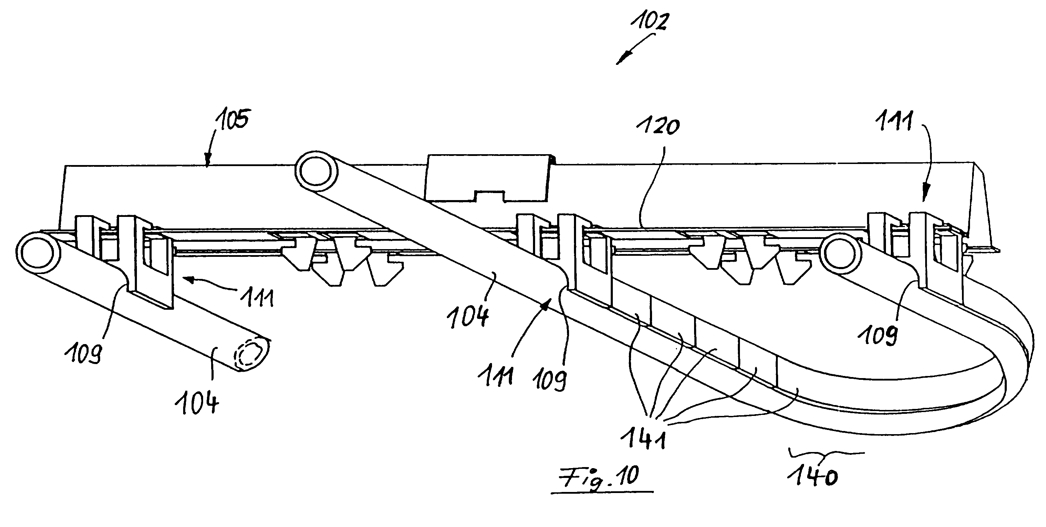

In Fig. 10 ist in einer perspektivischen Ansicht ein Teilbereich der Kühldecke 102 veranschaulicht, deren über die erste Formausnehmung 109 des Verbindungsblocks 111 bzw. des Rohrträgerteils (nicht dargestellt) in der Einbaulage gehaltenes Kühlrohr 104 zumindest im Bereich eines jeweiligen Verlegebogens 140 mit mehreren Rohrführungssegmenten 141 versehen ist.

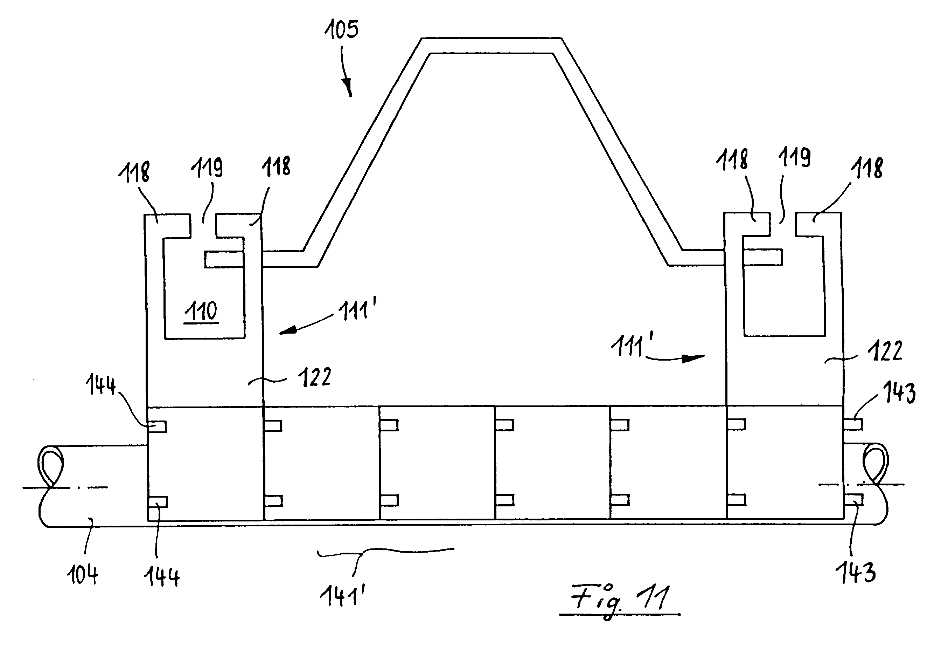

Die schematische Seitenansicht gemäß Fig. 11 verdeutlicht dabei im Zusammenhang mit Fig. 10, daß das Rohrführungssegment 141' einerseits den mit dem Hängeteil 122 über die Steckverbindung verbindbaren Paarungsteil 123 und andererseits die das Kühlrohr aufnehmende erste Formausnehmung 109 aufweisen kann und so eine wahlweise Verwendung und Kombination der Bauteile nach Art eines Bausatzes möglich ist.

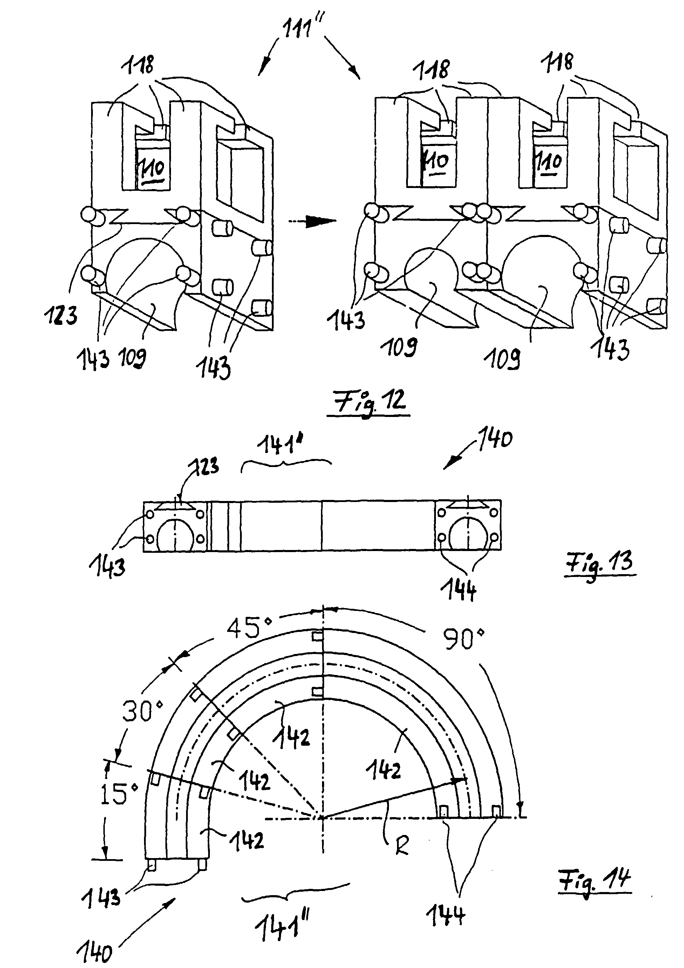

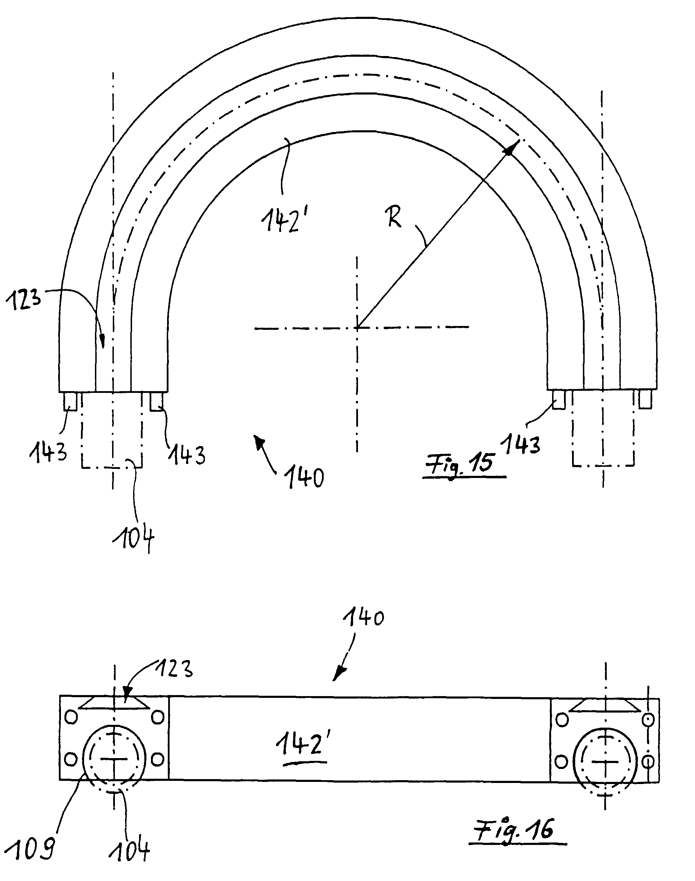

Die unterschiedlichen Ausführungsformen des Rohrführungssegmentes 141'' gemäß Fig. 13 bis 16 verdeutlichen, daß das Rohrführungssegment als ein dem Radius R des jeweiligen Verlegebogens 140 zumindest bereichsweise angepaßtes, unterschiedliche Segmente (z.B. 15°, 30°, 45°, 90°) bildendes Bogenformteil 142 ausgebildet sein kann. Zur Stabilisierung des Kühlrohres 104 im Bereich des gesamten Verlegebogens 140 kann dabei ein einstückiges Bogenformteil 142' (Fig. 15) bzw. das aus mehreren Segmenten zusammengesetztes Bauteil (Fig. 14) vorgesehen sein.

In zweckmäßiger Ausführungsform ist das jeweilige Rohrführungssegment 141,141',141" bzw. das Bogenformteil 142,142' mit jeweils in Rohrverlegerichtung verlaufenden, einerseits als Bolzensteckansätze 143 und andererseits als Aufnahmeöffnungen 144 ausgebildeten Steckverbindern versehen, so daß damit beliebige Stützkonturen gebildet werden können. Mit der allseitigen Anordnung derartiger Bolzenstecker 143 (Fig. 12) ist eine Stabilisierung des in Einbaulage befindlichen Kühlrohres 104 sowohl längs als auch quer zur Verlegerichtung erreichbar.

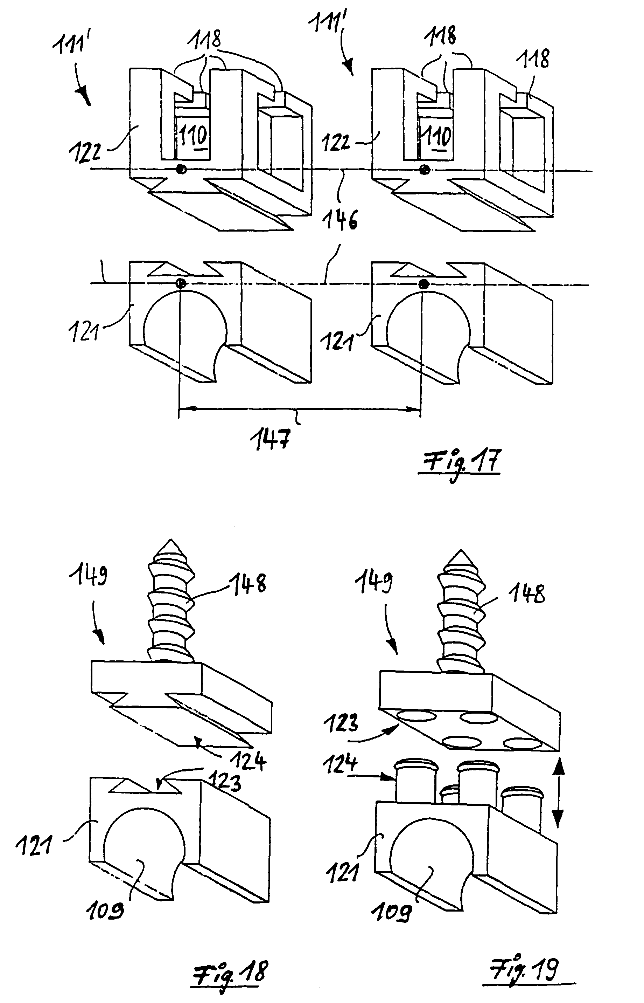

In Fig. 17 ist eine Montagehilfe für die Installation des erfindungsgemäßen Verbindungsblockes 111' in zweiteiliger Ausbildung (ähnlich Fig. 6) dargestellt, wobei das Rohrträgerteil 121 und der Hängeteil 122 jeweils an einem bandförmigen Verbindungsmittel 146 derart aufgereiht sind, daß die Einzelteile einen definierten Montageabstand 147 darbieten und in dieser vorbestimmten Stellung eine schnelle Montage ohne weitere Hilfsmittel möglich ist.

In Fig. 18 und Fig. 19 sind zwei weitere Ausführungsbeispiele für eine zusätzliche Verwendung der vorbeschriebenen Hängeteile 122 dargestellt, wobei diese mit einem unmittelbar an einer Decken- oder Wandfläche (nicht dargestellt) festlegbaren, vorzugsweise mit einem Schraubteil 148 versehenen Tragglied 149 derart kombiniert sind, daß das in der Formausnehmung 109 befindliche Kühlrohr (nicht dargestellt) mit geringem Aufwand mit dem eine zusätzliche Halterung bildenden Tragglied 149 über die Paarungsteile 123,124 verbunden werden kann.

## Patentansprüche

1. Kühldecke zur Raumluftklimatisierung mit einem von Kühlwasser durchströmten Rohrsystem, das zumindest bereichsweise zwischen der Decke (1;101) eines Gebäudes und jeweiligen Deckenelementen (3;103) vorgesehen und über ein diese tragendes Halteglied (5;105) in der Einbaulage, in der das Kühlrohr (4;104) am Deckenelement (3;103) anliegt, festgelegt ist, wobei zwischen dem Halteglied (5;105) und dem jeweiligen zugeordneten Bereich des Kühlrohres (4;104) ein dieses in einer Formausnehmung (9,9';109) aufnehmendes Verbindungsglied (10,10',10";111,111',111") angeordnet ist,
dadurch gekennzeichnet ,
daß das Verbindungsglied (10,10',10";111,111',111") höhenbeweglich am Halteglied (5;105) abgestützt ist.

2. Kühldecke nach Anspruch 1, dadurch gekennzeichnet, daß das Verbindungsglied (10,10',10") auf der zur Formausnehmung (9,9') abgewandten Seite zumindest einen in Einbaulage eine Aufnahmeöffnung (11,12) am Halteglied (5) durchgreifenden Traghaken (17;21,22) aufweist.

3. Kühldecke nach Anspruch 1 oder 2, dadurch gekennzeichnet, daß als Verbindungsglied (10) ein einstückiges, im Querschnitt ein U-Profil aufweisendes Formteil vorgesehen ist, dessen einer Profilschenkel (17) die Formausnehmung (9) für das Kühlrohr (4) aufweist, dessen anderer Profilschenkel mit dem Traghaken (17') versehen ist und dessen Basisschenkel (18) auf dem Halteglied (5) abstützbar ist.

4. Kühldecke nach Anspruch 3, dadurch gekennzeichnet, daß an einem der Profilschenkel (17') beidseits einer mittleren Formaussparung (20) zwei in jeweils paarweise angeordnete Aufnahmeöffnungen (11,12) am Halteglied (5) einführbare Traghaken (15,16) vorgesehen sind.

5. Kühldecke nach Anspruch 3 oder 4, dadurch gekennzeichnet, daß das Formteil über das in die Formausnehmung (9) eingreifende Kühlrohr (4) unverlierbar mit dem Halteglied (5) verbunden ist.

6. Kühldecke nach Anspruch 1 oder 2, dadurch gekennzeichnet, daß das Verbindungsglied (9') von einem einstückigen Drahtteil gebildet ist, das zumindest einen Halteschenkel (23,24) mit dem in die Aufnahmeöffnung (11,12) des Haltegliedes (5) einführbaren Traghaken (21,22) und einen Drahtbogen (25) als Formausnehmung (9') für das Kühlrohr (4) aufweist.

7. Kühldecke nach Anspruch 6, dadurch gekennzeichnet, daß das Drahtteil (9') zwei vom Drahtbogen (25) ausgehende Halteschenkel (23,24) aufweist und diese mit einem jeweils zu einer Mittelebene (26) symmetrischen, sich zangenartig mit dem anderen kreuzenden Traghaken (21,22) versehen sind.

8. Kühldecke nach Anspruch 6 oder 7, dadurch gekennzeichnet, daß der Traghaken (21,22) einen Auflageschenkelbereich (27,28) aufweist, der sich auf einen zwischen zwei Aufnahmeöffnungen (11,12) befindlichen Steg (29) abstützt.

9. Kühldecke nach Anspruch 7, dadurch gekennzeichnet, daß die Auflageschenkelbereiche (27,28) in gleicher Höhe oberhalb der Formausnehmung (9')-verlaufen und eine auf den abstützenden Steg (29) des Halteteils (5) abgestimmte Länge aufweisen.

10. Kühldecke nach einem der Ansprüche 7 bis 9, dadurch gekennzeichnet, daß beide Traghaken (21,22) einen sich aufwärts erstreckenden Führungsteil (31, 32) aufweisen, die gemeinsam eine Montagehilfe bilden.

11. Kühldecke nach einem der Ansprüche 6 bis 10, dadurch gekennzeichnet, daß die beiden Halteschenkel (23,24) in der Einbaulage in einer zur Rohrverlegeachse (34) senkrechten Halteebene verlaufen, aus der sie zu Montagezwecken federelastisch ausschwenkbar sind.

12. Kühldecke nach einem der Ansprüche 1 bis 11, dadurch gekennzeichnet, daß das Verbindungsglied (111,111',111") als spritzgegossenes Kunststoff-Formteil ausgebildet ist.

13. Kühldecke nach Anspruch 12, dadurch gekennzeichnet, daß das Verbindungsglied (111,111',111") die Grundform eines Parallelepipeds aufweist.

14. Kühldecke nach Anspruch 12 oder 13, dadurch gekennzeichnet, daß der mit dem Halteglied (105) verbindbare, in Einbaustellung obere Bereich des Verbindungsgliedes (111,111',111") eine sich mit sämtlichen Außenseiten verschneidende Formausnehmung (110,110') aufweist, die von der Oberseite des Verbindungsglieds her über einen Montageschlitz (119) zugänglich ist und zwei Paare von Haken (118) für eine Verbindung mit dem Halteglied (105) begrenzt.

15. Kühldecke nach einem der Ansprüche 12 bis 14, dadurch gekennzeichnet, daß das Verbindungsglied (111',111") aus zwei zusammenfügbaren Bauteilen besteht, von denen das eine als die erste Formausnehmung (109) aufweisendes Rohrträgerteil (121) und das andere als die zweite Formausnehmung (110,110') aufweisendes Hängeteil (122) ausgebildet sind.

16. Kühldecke nach Anspruch 15, dadurch gekennzeichnet, daß das Rohrträgerteil (121) und das Hängeteil (122) durch Steckverbindungsmittel (123,124) verbindbar sind.

17. Kühldecke nach Anspruch 16, dadurch gekennzeichnet, daß die Steckverbindungsmittel (123,124) zwischen Hängeteil (122) und Rohrträgerteil (121) eine Nut- und Federverbindung bilden.

18. Kühldecke nach Anspruch 17, dadurch gekennzeichnet, daß die Steckverbindungsmittel (123,124) eine an schwalbenschwanzförmigen oder an zylindersegmentförmigen Flächen in Eingriff stehenden Nut- und Federverbindung bilden.

19. Kühldecke nach Anspruch 16, dadurch gekennzeichnet, daß die Steckverbindungsmittel (123,124) eine druckknopfartige Rastverbindung bilden, die eine in Einbaustellung vertikale Bohrung (134) im Hängeteil (122) und einen Rastansatz (135) am Rohrträgerteil (121) umfaßt.

20. Kühldecke nach einem oder mehreren der Ansprüche 12 bis 19, gekennzeichnet durch Rohrführungssegmente (141,141',141";142,142',142"), die zwischen Verbindungsgliedern (111,111',111") mit dem Kühlrohr (104) verbindbar sind.

21. Kühldecke nach Anspruch 20, dadurch gekennzeichnet, daß die Rohrführungssegmente (141,141', 141";142,142',142") untereinander und/oder mit benachbarten Verbindungsgliedern (111,111',111") verbindbar sind.

22. Kühldecke nach Anspruch 20 oder 21, dadurch gekennzeichnet, daß die Rohrführungssegmente (141, 141',141";142,142',142") für eine rastarretierte Aufnahme des Kühlrohres (104) Formausnehmungen entsprechend denen in den Verbindungsgliedern (111,111',111") aufweisen, deren Längsmittelachse gerade oder bogenförmig verläuft.

23. Kühldecke nach Anspruch 22, dadurch gekennzeichnet, daß Rohrführungssegmente (141,141', 141";142,142',142") mit unterschiedlicher Länge und/oder mit unterschiedlicher Krümmung der Längsmittelsachse ihrer Formausnehmung vorgesehen sind.

24. Kühldecke nach einem der Ansprüche 20 bis 23, dadurch gekennzeichnet, daß die Rohrführungssegmente (141,141',141";142,142',142") oberseitig mit einem Verbindungsmittelteil (123) versehen sind, der dem des Rohrträgerteils (121) eines Verbindungsgliedes (111,111',111") entspricht.

25. Kühldecke nach einem der Ansprüche 20 bis 24, dadurch gekennzeichnet, daß die Rohrführungssegmente (141,141',141";142,142',142") zumindest an ihren quer zur Rohrverlegerichtung verlaufenden Stirnflächen abwechselnd mit Klemmzapfen (143) und Klemmöffnungen (144) versehen sind.

26. Kühldecke nach einem der Ansprüche 21 bis 24, dadurch gekennzeichnet, daß die Verbindungsglieder (111,111',111") zumindest an ihren quer zur Verlegerichtung des Rohres (104) verlaufenden Stirnflächen abwechselnd mit Klemmverbindungsmitteln (143,144) für eine Verbindung mit Rohrführungssegmenten versehen sind.

27. Kühldecke nach einem der Ansprüche 12 bis 26, dadurch gekennzeichnet, daß mehrere Verbindungsglieder (111) bzw. Hängeteile (122) und/oder Rohrträgerteile (121) von Verbindungsgliedern (111',111") an einem vorzugsweise biegsamen Verbindungselement (146) definiertem Montageabstand angebracht sind, daß in oder quer zur Rohrverlegerichtung verläuft.

28. Kühldecke nach einem der Ansprüche 15 bis 27, gekennzeichnet durch ein mit einem Rohrträgerteil (121) verbindbares, unmittelbar an einer Decken- oder Wandfläche festlegbares, vorzugsweise einen Schraubgewinde- oder Dübelteil (148) aufweisendes Tragglied (149).

## Claims

1. A cooling ceiling for air conditioning a room, comprising a pipe system having cooling water flowing therethrough, which pipe system is provided at least in regions between the ceiling (1;101) of a building and respective ceiling elements (3;103) and in the installed position, in which the cooling pipe (4;104) lies against the ceiling element (3;103), is fixed by a holding element (5;105) supporting the ceiling (1; 101), wherein a connecting element (10,10',10"; 111,111',111") accommodating the cooling pipe (4; 104) in a shaped recess (9,9';109), is disposed between the holding element (5;105) and the respectively assigned region of the cooling pipe (4;104)
**characterized in**
that the connecting element (10,10',10";111, 111',111") is supported in a vertically adjustable manner at the holding element (5;105).

2. The cooling ceiling according to claim 1, characterized in that the connecting element (10, 10',10") on the side averted from the shaped recess (9,9'), comprises at least one supporting hook (17;21,22) which in the installed position reaches through an accommodating opening (11,12) on the holding element (5).

3. The cooling ceiling according to claim 1 or 2, characterized in that the connecting element (10) is provided as a one-pieced molded part of a U-shaped cross section, said molded part having one of its profiled legs (17) provided with the shaped recess (9) for the cooling pipe (4), having its other profiled leg provided with the supporting hook (17'), and having its base leg (18) arranged to be supported on the holding element (5).

4. The cooling ceiling according to claim 3, characterized in that, at one of the profiled legs (17'), two supporting hooks (15,16), adapted to be introduced into accommodating openings (11, 12) respectively arranged in pairs at the holding element (5), are provided on both sides of a central shaped recess (20).

5. The cooling ceiling according to claim 3 or 4, characterized in that said molded part is connected undetachably to the holding element (5) by the cooling pipe (4) engaging the shaped recess (9).

6. The cooling ceiling according to claim 1 or 2, characterized in that the connecting element (10') is formed from a single piece of wire which has at least one holding leg (23,24) comprising the supporting hook (21,22) which can be introduced into the accommodating opening (11, 12) of the holding element (5), and comprising a wire arch (25) as the shaped recess (9') for the cooling pipe (4).

7. The cooling ceiling according to claim 6, characterized in that said wire piece (9') comprises two holding legs (23,24) which start out from the wire arch (25) and these are provided with a supporting hook (21,22) which is respectively symmetrical to a center plane (26) and crosses with the other supporting hook (21,22) in pliers fashion.

8. The cooling ceiling according to claim 6 or 7, characterized in that the supporting hook (21, 22) comprises a supporting leg region (27,28) which is supported on a cross member (29) arranged between two accommodating openings (11, 12).

9. The cooling ceiling according to claim 7, characterized in that the supporting leg regions (27,28) extend at the same height above the shaped recess (9') and have a length corresponding to said supporting cross member (29) of the holding element (5).

10. The cooling ceiling according to any one of claims 7 to 9, characterized in that the two supporting hooks (21,22) each comprise an upwardly extending guiding part (31,32), said guiding parts (31,32) jointly forming a mounting aid.

11. The cooling ceiling according to any one of claims 6 to 10, characterized in that the two holding legs (23,24) in the installed position extend in a holding plane perpendicular to the axis (34) in which the pipes are laid and out of which they can be swiveled elastically for installation purposes.

12. The cooling ceiling according to any one of claims 1 to 11, characterized in that the connecting element (111,111',111") is formed as an injection-molded plastic part.

13. The cooling ceiling according to claim 12, characterized in that the connecting element (111, 111',111") has the basic shape of a parallelepiped.

14. The cooling ceiling according to claim 12 or 13, characterized in that the region of the connecting element (111,111',111") which in the installed position is the upper region and can be connected with the holding element (105), has a shaped recess (110,110') which intersects with all external sides, is accessible from the upper side of the connecting element via an installation slot (119) and defines two pairs of hooks (118) for a connection with the holding element (105).

15. The cooling ceiling according to any one of claims 12 to 14, characterized in that the connecting element (111',111") consists of two components adapted to be assembled, one of said components being formed as a pipe-supporting part (121) comprising the first shaped recess (109) and the other component being formed as a suspension part (122) comprising the second shaped recess (110, 110').

16. The cooling ceiling according to claim 15, characterized in that the pipe-supporting part (121) and the suspension part (122) can be connected by plug and socket connection means (123,124).

17. The cooling ceiling according to claim 16, characterized in that the plug and socket connection means (123,124) form a groove and spring connection between the suspension part (122) and the pipe-supporting part (121).

18. The cooling ceiling according to claim 17, characterized in that the plug and socket connection means (123,124) form a groove and spring connection which is in engagement with dovetailed or cylindrical segment-shaped surfaces.

19. The cooling ceiling according to claim 16, characterized in that the plug and socket connection means (123,124) form a push-button-like locking connection comprising a bore (134) in the suspension part (122), said bore (134) being vertical in the installed position, and a locking projection (135) on the pipe-supporting part (121).

20. The cooling ceiling according to one or a plurality of claims 12 to 19, characterized by pipe-guiding segments (141,141',141";142,142', 142") which can be connected between connecting elements (111,111',111") with the cooling pipe (104).

21. The cooling ceiling according to claim 20, characterized in that the pipe-guiding segments (141,141',141";142,142',142") can be connected with one another and/or with adjacent connecting elements (111,111',111").

22. The cooling ceiling according to claim 20 or 21, characterized in that the pipe-guiding segments (141,141',141";142,142',142") comprise shaped recesses corresponding to those in the connecting elements (111,111',111") for a locked accommodation of the cooling pipe (104), the longitudinal center line of said recesses running linearly or in a curved fashion.

23. The cooling ceiling according to claim 22, characterized in that the pipe-guiding segments (141,141',141";142,142',142") have different lengths and/or different curvatures of the longitudinal center line of their shaped recess.

24. The cooling ceiling according to any one of claims 20 to 23, characterized in that the pipe-guiding segments (141,141',141";142,142',142") are provided on their upper sides with connecting means (123) which correspond to the connecting means of the pipe-supporting part (121) of a connecting element (111,111',111").

25. The cooling ceiling according to any one of claims 20 to 24, characterized in that the pipe-guiding segments (141,141',141";142,142',142") are provided alternately with clamping pegs (143) and clamping openings (144) at least on the front faces running transversely to the direction in which the pipes are laid.

26. The cooling ceiling according to any one of claims 21 to 24, characterized in that the connecting elements (111,111',111") at least on their front faces running transversely to the direction in which the pipe (104) is laid are provided alternately with clamping connecting means (143,144) for a connection with the pipe guiding segments.

27. The cooling ceiling according to any one of claims 12 to 26, characterized in that a plurality of connecting elements (111) or suspension parts (122) and/or pipe-supporting parts (121) of connecting elements (111',111) are mounted at a defined installation distance at a preferably flexible connecting element (146) extending in the direction of or at right angles to the direction in which the pipes are laid.

28. The cooling ceiling according to any one of claims 15 to 27, characterized by a supporting element (149) which can be connected to a pipe-supporting part (121), can be fixed directly to a ceiling surface or wall surface and preferably has a screw thread part or a dowel part (148).

## Revendications

1. Plafond de refroidissement pour le conditionnement d'air dans des locaux avec un système de tuyaux parcourus par de l'eau de refroidissement, qui est prévu au moins par endroits entre le plafond (1 ; 101) d'un bâtiment et des éléments de plafond (3 ; 103) et qui est fixé par l'intermédiaire d'un élément de support (5 ; 105) portant ces éléments de plafond dans une position de montage dans laquelle le tuyau de refroidissement (4 ; 104) est contre l'élément de plafond (3 ; 103), un élément de fixation (10, 10', 10" ; 111, 111', 111") qui loge le tuyau de refroidissement (4 ; 104) dans un creux (9, 9' ; 109) étant agencé entre l'élément de support (5 ; 105) et la zone associée respective du tuyau de refroidissement (4 ; 104),
caractérisé en ce que l'élément de fixation (10, 10', 10" ; 111, 111', 111") est appuyé, de façon à être mobile dans le sens de la hauteur, sur l'élément de support (5 ; 105).

2. Plafond de refroidissement selon la revendication 1, caractérisé en ce que l'élément de fixation (10, 10', 10") comporte sur le côté opposé au creux (9, 9') au moins un crochet porteur (17 ; 21, 22) traversant en position de montage un trou de réception (11, 12) situé sur l'élément de support (5).

3. Plafond de refroidissement selon la revendication 1 ou 2, caractérisé en ce qu'il est prévu comme élément de fixation (10) une pièce usinée, construite en une seule partie et ayant une section en profil en U, dont une branche du profil (17) comporte le creux (9) pour le tuyau de refroidissement (4), dont l'autre branche du profil est munie du crochet porteur (17') et dont la base du profil en U (18) peut être appuyée sur l'élément de support (5).

4. Plafond de refroidissement selon la revendication 3, caractérisé en ce qu'il est prévu sur une branche du profil (17'), des deux côtés d'un creux central (20), deux crochets porteurs (15, 16) qui peuvent être introduits dans des trous de réception (11, 12) disposés à chaque fois par paire sur l'élément de support (5).

5. Plafond de refroidissement selon la revendication 3 ou 4, caractérisé en ce que la pièce usinée est liée, de façon à ne pas pouvoir être perdue, à l'élément de support (5) par l'intermédiaire du tuyau de refroidissement (4) pénétrant dans le creux (9).

6. Plafond de refroidissement selon la revendication 1 ou 2, caractérisé en ce que l'élément de fixation (9') est formé par une pièce en fil métallique, en une seule partie, qui comporte au moins un côté de support (23, 24), le crochet porteur (21, 22) pouvant être introduit dans le trou de réception (11, 12) de l'élément de support (5), et avec une courbe en fil métallique (25) comme creux (9') pour le tuyau de refroidissement (4).

7. Plafond de refroidissement selon la revendication 6, caractérisé en ce que la pièce en fil métallique (9') comporte deux jambes de support (23, 24) partant de la courbe en fil métallique (25) et ces deux jambes de support sont munies de crochets porteurs (21, 22) symétriques par rapport à un plan médian (26) et se croisant comme pour une pince.

8. Plafond de refroidissement selon la revendication 6 ou 7, caractérisé en ce que le crochet porteur (21, 22) comporte une zone de jambe d'appui (27, 28) qui s'appuie sur une traverse (29) se trouvant entre deux trous de réception (11, 12).

9. Plafond de refroidissement selon la revendication 7, caractérisé en ce que les zones de jambe d'appui (27, 28) s'étendent à la même hauteur au-dessus du creux (9') et ont une longueur adaptée à la traverse (29), servant d'appui, de l'élément de support (5).

10. Plafond de refroidissement selon l'une des revendications 7 à 9, caractérisé en ce que les deux crochets porteurs (21, 22) comportent chacun une partie de guidage (31, 32) qui s'étend vers le haut et qui constitue une aide au montage.

11. Plafond de refroidissement selon l'une des revendications 6 à 10, caractérisé en ce que les deux jambes de support (23, 24) s'étendent en position de montage dans un plan de support perpendiculaire à l'axe de pose de tuyau (34) et elles peuvent pivoter de manière élastique hors de ce plan de support à des fins de montage.

12. Plafond de refroidissement selon l'une des revendications 1 à 11, caractérisé en ce que l'élément de fixation (111, 111', 111") est construit comme une pièce usinée en matière plastique moulée par injection.

13. Plafond de refroidissement selon la revendication 12, caractérisé en ce que l'élément de fixation (111, 111', 111") a une forme de base parallélépipédique.

14. Plafond de refroidissement selon la revendication 12 ou 13, caractérisé en ce que la zone supérieure, en position de montage, de l'élément de fixation (111, 111', 111"), zone qui peut être liée à l'élément de support (105), comporte un creux (110, 110'), coupant tous les côtés extérieurs, qui est accessible par le dessus de l'élément de fixation par l'intermédiaire d'une fente de montage (119) et qui limite deux paires de crochets (118) pour une fixation à l'élément de support (105).

15. Plafond de refroidissement selon l'une des revendications 12 à 14, caractérisé en ce que l'élément de fixation (111', 111") est constitué de deux pièces pouvant être assemblées dont l'une est construite comme une pièce porteuse pour le tuyau (121) comportant le premier creux (109) et dont l'autre est construite comme une pièce de suspension (122) comportant le second creux (110, 110').

16. Plafond de refroidissement selon la revendication 15, caractérisé en ce que la pièce porteuse pour le tuyau (121) et la pièce de suspension (122) peuvent être assemblées par l'intermédiaire de moyens d'assemblage par emboîtement (123, 124).

17. Plafond de refroidissement selon la revendication 16, caractérisé en ce que les moyens d'assemblage par emboîtement (123, 124) forment entre la pièce de suspension (122) et la pièce porteuse pour le tuyau (121) un assemblage à fausse languette.

18. Plafond de refroidissement selon la revendication 17, caractérisé en ce que les moyens d'assemblage par emboîtement (123, 124) forment un assemblage à fausse languette venant en prise par des surfaces en forme de queue d'aronde ou en forme de segment cylindrique.

19. Plafond de refroidissement selon la revendication 16, caractérisé en ce que les moyens d'assemblage par emboîtement (123, 124) forment un assemblage à cran, comme un bouton-pression, qui comprend un trou (134), vertical en position de montage, dans la pièce de suspension (122) et une partie en saillie à cran (135) sur la partie porteuse pour le tuyau (121).

20. Plafond de refroidissement selon l'une ou plusieurs des revendications 12 à 19, caractérisé par des segments de guidage de tuyau (141, 141', 141" ; 142, 142', 142") qui peuvent être fixés au tuyau de refroidissement (104) entre des éléments de fixation (111, 111', 111").

21. Plafond de refroidissement selon la revendication 20, caractérisé en ce que les segments de guidage de tuyau (141, 141', 141" ; 142, 142', 142") peuvent être assemblés les uns aux autres et/ou à des éléments de fixation (111, 111', 111") voisins.

22. Plafond de refroidissement selon la revendication 20 ou 21, caractérisé en ce que les segments de guidage de tuyau (141, 141', 141" ; 142, 142', 142") comportent, en vue d'un logement du tuyau de refroidissement (104) arrêté par un cran, des creux qui correspondent à ceux dans les éléments de fixation (111, 111', 111") et dont l'axe central longitudinal s'étend en forme de droite ou de courbe.

23. Plafond de refroidissement selon la revendication 22, caractérisé en ce qu'il est prévu des segments de guidage de tuyau (141, 141', 141" ; 142, 142', 142") qui ont différentes longueurs et/ou dont les axes centraux longitudinaux respectifs des creux ont différents rayons de courbure.

24. Plafond de refroidissement selon l'une des revendications 20 à 23, caractérisé en ce que les segments de guidage de tuyau (141, 141', 141" ; 142, 142', 142") sont munis sur le dessus d'une partie formant moyen d'assemblage (123) qui correspond à celle de la pièce porteuse pour le tuyau (121) d'un élément de fixation (111, 111', 111").

25. Plafond de refroidissement selon l'une des revendications 20 à 24, caractérisé en ce que les segments de guidage de tuyau (141, 141', 141" ; 142, 142', 142") sont munis, au moins sur leurs surfaces frontales s'étendant perpendiculairement à la direction de pose de tuyau, en alternance de tourillons (143) et de trous (144).

26. Plafond de refroidissement selon l'une des revendications 21 à 24, caractérisé en ce que les éléments de fixation (111, 111', 111") sont munis en alternance, au moins sur leurs surfaces frontales s'étendant perpendiculairement à la direction de pose du tuyau (104), de moyens d'assemblage par serrage (143, 144) pour une fixation aux segments de guidage de tuyau.

27. Plafond de refroidissement selon l'une des revendications 12 à 26, caractérisé en ce que plusieurs éléments de fixation (111), c'est-à-dire plusieurs pièces de suspension (122) et/ou plusieurs pièces porteuses pour les tuyaux (121) d'éléments de fixation (111', 111"), sont placés à une distance de montage déterminée sur un élément de fixation (146), de préférence souple, qui s'étend dans la direction de pose des tuyaux ou perpendiculairement à cette direction de pose.

28. Plafond de refroidissement selon l'une des revendications 15 à 27, caractérisé par un élément porteur (149) qui peut être assemblé à une pièce porteuse pour le tuyau (121), qui peut être fixé directement à une surface de plafond ou de mur et qui comporte de préférence une pièce filetée ou une cheville (148).
